# EUROPÄISCHE PATENTSCHRIFT

(11) **EP 2 158 412 B1**
(45) Veröffentlichungstag und Bekanntmachung des Hinweises auf die Patenterteilung: **15.08.2012**
(21) Anmeldenummer: 08750091.4
(22) Anmeldetag: 06.05.2008
(51) Int. Cl.: F16C 35/04, F16C 35/077

(54) **LAGERANORDNUNG**
BEARING ARRANGEMENT
SYSTEME DE PALIER

(30) Priorität: 13.06.2007 DE 102007027161
(43) Veröffentlichungstag der Anmeldung: 03.03.2010
(73) Patentinhaber: Schaeffler Technologies AG & Co. KG, 91074 Herzogenaurach (DE)
(72) Erfinder: BAIER, Richard, 91086 Aurachtal (DE); HEINZ, Andreas, 90449 Nürnberg (DE); RADINGER, Norbert, 90475 Nürnberg (DE)
(86) Internationale Anmeldenummer: PCT/EP2008/055540
(87) Internationale Veröffentlichungsnummer: WO 2008/151885

(56) Entgegenhaltungen:
- DE-A1- 2 460 448
- DE-A1- 10 355 363
- DE-B3- 10 355 407
- US-A1- 2003 077 016

## Beschreibung

### Beschreibung

### Gebiet der Erfindung

Die Erfindung betrifft eine Lageranordnung, bestehend aus einem zumindest teilweise eben ausgebildeten Lagerträger mit einer Aufnahmebohrung und mindestens einem mit diesem verbundenen Lager, wobei ein Außenring des Lagers eine Ausnehmung zur Aufnahme des Lagerträgers aufweist. Außerdem betrifft die Erfindung Verfahren zur Herstellung der Lageranordnung.

### Hintergrund der Erfindung

Derartige Lageranordnungen, bei denen ein Wälzlager von einem Lagerträger aufgenommen ist, werden häufig zur Fixierung von Lagern im Getriebebau benötigt.

So ist beispielsweise aus der DE 200 19 278 U1 eine Verbindung zwischen einem Lagerträger und einem Lager bekannt geworden, bei der der Lageraußenring mit einer Ausnehmung versehen ist, die in axialer Richtung nach innen abfällt. In dieser Ausnehmung wird ein Lagerträger eingeschnappt, dessen Aufnahmebohrung gleichmäßig um den Umfang voneinander beabstandete Haltenasen aufweist. Beim axialen Aufschieben des Lagerträgers in die Ausnehmung des Lagerringes sollen die Haltenasen elastisch zurückfedern und nach Erreichen des am tiefsten liegenden Teils der Ausnehmung ihre Ausgangslage einnehmen, sodass eine unverlierbare Baueinheit zwischen Lagerträger und zugehörigem Lager gebildet ist.

Nachteilig dabei ist, dass das erforderliche Zusammenspiel zwischen Ausnehmung des Lageraußenringes und der Aufnahmebohrung des Lagerträgers sehr geringe Toleranzen erfordert. Mit anderen Worten, damit das elastische Zurückfedern und das elastische Auffedern der Haltenasen überhaupt möglich ist, müssen Lagerträger und Lagerring hinsichtlich ihrer Toleranzen sehr aufeinander abgestimmt sein, was einen erhöhten Fertigungsaufwand bedeutet. So ist es beispielsweise erforderlich, dass die Ausnehmung nach der Wärmebehandlung des Lageraußenringes nochmals überarbeitet werden muss, beispielsweise durch ein Hartschleifen oder ein Hartdrehen. Ein weiterer Nachteil ist dadurch begründet, dass die Verbindung zwischen Lagerträger und Lager sehr unflexibel ist, weil bei einer Durchmesseränderung des Lagers immer ein neuer Lagerträger hergestellt werden muss.

Eine weitere gattungsgemäße Lageranordnung ist aus der DE 10 2005 012 323 B3 vorbekannt. Wie aus der Beschreibung und den zugehörigen Figuren ersichtlich, ist der Lageraußenring eines Kugellagers mit einer Ausnehmung versehen, auf die ein Lagerträger mit seiner Aufnahmebohrung aufgesetzt ist. Der Zusammenhalt zwischen dem Lageraußenring und dem Lagerträger ist dadurch realisiert, dass Lagerträger und Lageraußenring formschlüssig durch ein Federelement verbunden sind, das mehrere gleichmäßig um den Umfang voneinander beabstandete Haltenasen aufweist, die an einem Hinterschnitt der Ausnehmung zur Anlage gelangen.

Auch hier treffen dem Grunde nach die vorstehend geschilderten Nachteile zu. Dies bedeutet, auch diese Verbindungsanordnung ist sehr unflexibel, da für jede Lageranordnung ein passendes Federelement hergestellt werden muss. Dieses Federelement besteht aus einem hochwertigen Bauteil und ist aufgrund seiner komplizierten Formgebung schwierig herzustellen, was diese Lageranordnung insgesamt verteuert.

Eine Lageranordnung mit den Merkmalen des Oberbegriffs des Anspruchs 1 ist im Übrigen aus DE 103 55 362 A bekannt.

### Zusammenfassung der Erfindung

Ausgehend von den Nachteilen des bekannten Standes der Technik liegt der Erfindung daher die Aufgabe zugrunde, eine gattungsgemäße Lageranordnung bereitzustellen, deren Verbindung zwischen Lager und Lagerträger einfach herstellbar ist und die darüber hinaus eine große Flexibilität aufweist.

Erfindungsgemäß wird diese Aufgabe nach dem kennzeichnenden Teil von Anspruch 1 in Verbindung mit dessen Oberbegriff gelöst,

Die Erfindung stellt also darauf ab, dass für die formschlüssige Verbindung zwischen Lager und Lagerträger ein variables ringartiges Halteelement verwendet ist, das durch seinen Radialschlitz in seiner Umfangsausdehnung variabel ist. Damit kann zum einen das erfindungsgemäße Halteelement in einfacher Weise montiert werden, indem es beispielsweise aufgeweitet und in den Hinterschnitt eingesetzt wird. Zum anderen ist dieses erfindungsgemäß ausgebildete Halteelement aufgrund seines Radialschlitzes in seiner Umfangsausdehnung variabel, sodass es für unterschiedlich dimensionierte Lager bzw. Lagerträger verwendbar ist.

In Weiterbildung der Erfindung ist nach Anspruch 2 vorgesehen, dass der Ringkörper, der an einem axialen Ende in einen radial nach innen gerichteten Flansch übergeht, am anderen axialen Ende an mehreren voneinander beabstandeten Umfangsstellen Haltenasen aufweist, die den Lagerträger nach deren Umlegen in radialer Richtung überdecken.

Der Vorteil dieses ringförmigen Halteelementes liegt darin, dass es sich einfach fertigen lässt und das durch ein unkompliziertes Umlegen von dessen Haltenasen die formschlüssige Verbindung gewährleistet ist. In diesem Zusammenhang hat es sich nach einem weiteren Merkmal gemäß Anspruch 3 als vorteilhaft erwiesen, dass der Ringkörper zwischen dem Lagerträger und dem Außenring mittels einer Spiel- oder einer Presspassung angeordnet ist.

Nach einem weiteren Merkmal gemäß Anspruch 4 ist vorgesehen, dass das Halteelement durch einen spanlosen Formgebungsvorgang hergestellt ist. Wie der Fachmann weiß, lassen sich so derartige Halteelemente in verschiedenen Größenabmessungen und unterschiedlichen Formen kostengünstig herstellen.

Auch hat es sich nach einem anderen zusätzlichen Merkmal gemäß Anspruch 5 als vorteilhaft erwiesen, dass das Halteelement eine Transportsicherung in Form einer Sollbruchstelle aufweist. Diese Sollbruchstelle verhindert zunächst, dass das Halteelement seinen Radialschlitz aufweist, der dessen veränderte Umfangsausdehnung ermöglicht. Durch diesen fehlenden Radialschlitz wird insbesondere die Montage bzw. die Zuführung zur Montageeinheit erleichtert, da sich die Halteelemente über ihre Radialschlitze nicht in einander verhaken können.

Schließlich sind in den Ansprüchen 6 und 7 zwei zugehörige Verfahren zur Herstellung einer erfindungsgemäßen Lageranordnung beschrieben. Danach ist gemäß Anspruch 6 vorgesehen, dass das Halteelement als ein profiliertes Endlosband durch einen spanlosen Formgebungsvorgang hergestellt ist, anschließend ein passendes Bandende abgelängt ist, dieses danach zu einem Halteelement umgebogen ist. Die andere Variante geht aus Anspruch 7 hervor, nach der das Halteelement als ein Einzelteil mit einer Transportsicherung in Form einer Sollbruchstelle hergestellt ist. In beiden Fällen wird das geschlitzte ringartige Halteelement aufgeweitet und in den Hinterschnitt des Lageraußenringes eingefedert, bevor der Lagerträger auf das Halteelement aufgeschoben und danach die Haltenasen umgebogen sind.

Weitere Merkmale der Erfindung ergeben sich aus der nachfolgenden Beschreibung und aus den Zeichnungen, in denen ein Ausführungsbeispiel der Erfindung in vereinfachter Form dargestellt ist.

### Kurze Beschreibung der Zeichnungen

Es zeigen:
- Figur 1: eine perspektivische Darstellung einer erfindungsgemäßen Lageranordnung,
- Figur 2: eine Seitenansicht dieser Lageranordnung,
- Figur 3: einen Axialschnitt entlang der Linie III-III in Figur 2,
- Figur 4: eine vergrößerte Darstellung einer Einzelheit aus Figur 3,
- Figur 5: eine Seitenansicht auf ein erfindungsgemäßes Halteelement,
- Figur 6: eine perspektivische Darstellung des erfindungsgemäßen Halteelementes,
- Figur 7: eine vergrößerte Darstellung einer Einzelheit aus Figur 5 und
- Figur 8: eine weitere vergrößerte Darstellung einer Einzelheit aus Figur 5.

### Ausführliche Beschreibung der Zeichnungen

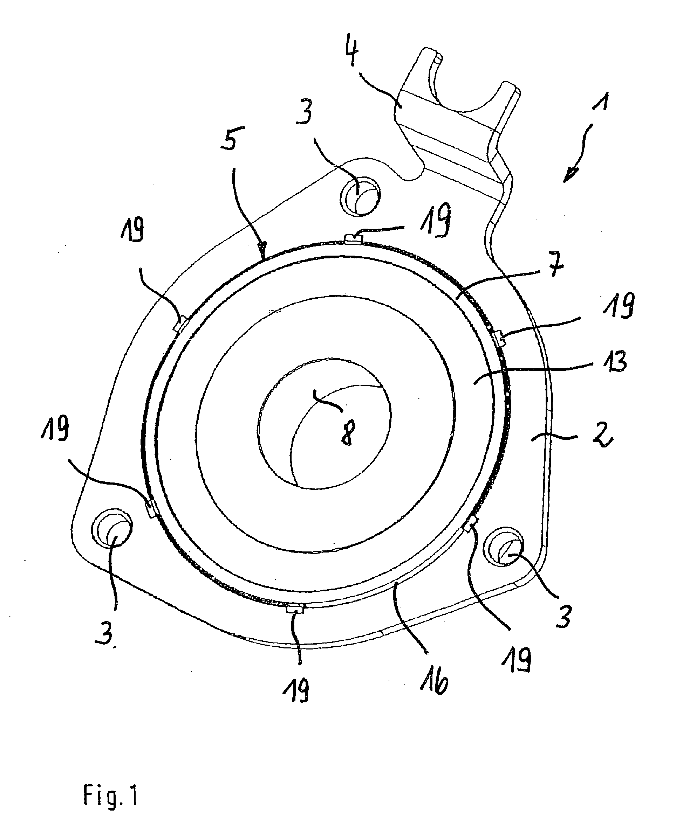

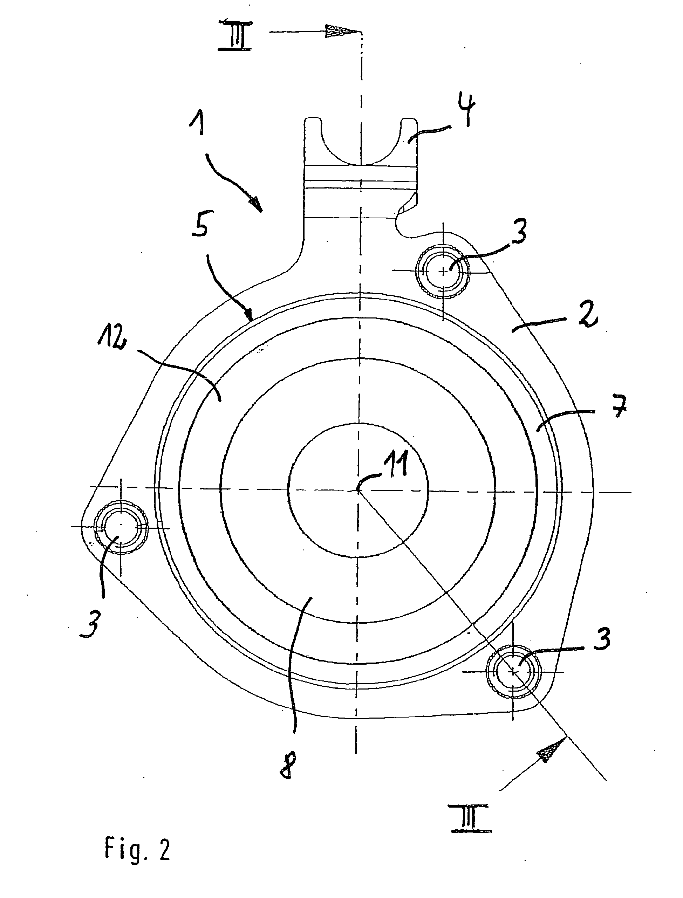

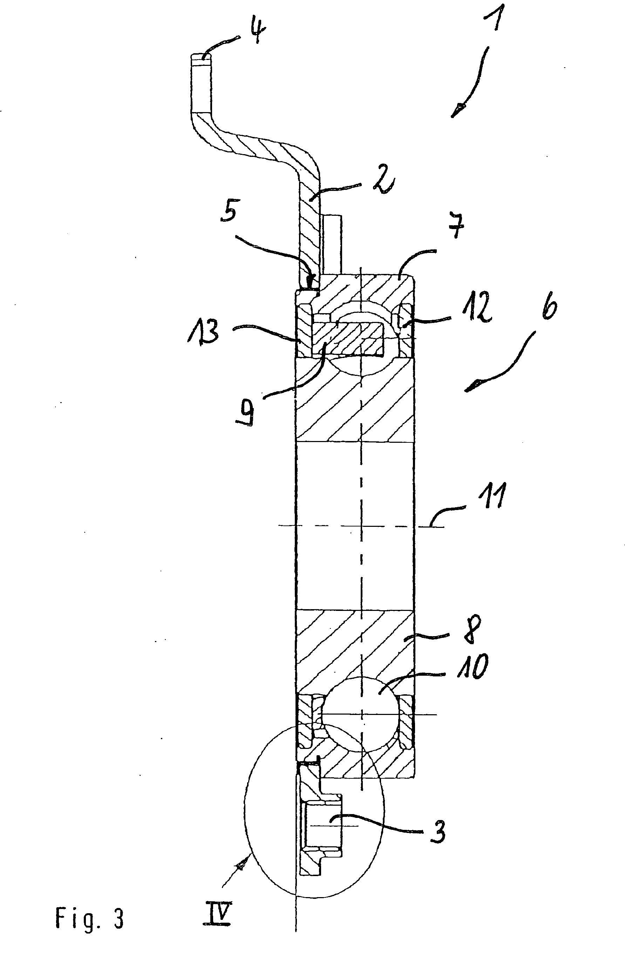

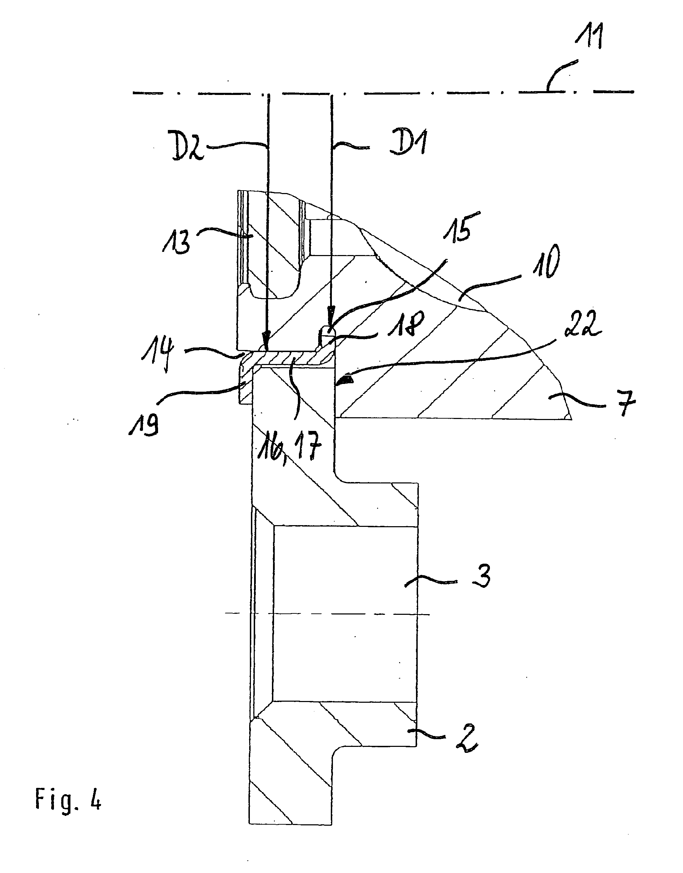

Wie insbesondere aus den Figuren 1, 2 und 3 ersichtlich, besteht die erfindungsgemäße Lageranordnung 1 aus dem Lagerträger 2, der im Wesentlichen eben ausgebildet ist und in diesem Bereich mit drei Befestigungsbohrungen 3 versehen ist. An seinem oberen Ende geht der Lagerträger 2 in den abgewinkelten Teil 4 über, wobei die geometrische Kontur des Lagerträgers 2 für die Erfindung jedoch von völlig untergeordneter Bedeutung ist. Der Lagerträger 2 nimmt mit seiner Aufnahmebohrung 5 ein Lager 6 auf, das aus dem Lageraußenring 7 und dem Lagerinnenring 8 besteht. Zwischen beiden Lagerringen 7, 8 wälzen auf nicht näher bezeichneten Laufbahnen in einem Käfig 9 geführte Lagerkugeln 10 um ihre Achse 11 ab. Darüber hinaus ist das Lager 6 beidseitig durch Deckscheiben 12, 13 abgedichtet. Diese verhindern, dass einerseits von außen nach innen Schmutz in das Lager 6 eindringen kann und das andererseits von innen nach außen Schmiermittel aus dem Lager 6 austreten kann. Wie insbesondere aus der vergrößerten Darstellung in Figur 4 ersichtlich, ist der Lageraußenring 7 mit einer umlaufenden stufenförmigen Ausnehmung 14 versehen, die an ihrem axial innen liegenden Ende in einen Hinterschnitt 15 übergeht. Bezogen auf die Lagerachse 11, ist dem Grund des Hinterschnittes 15 der Durchmesser D1 und der Mantelfläche der in axialer Richtung verlaufenden Ausnehmung 14 der Durchmesser D2 zuzuordnen, wobei D1 < D2 ist.

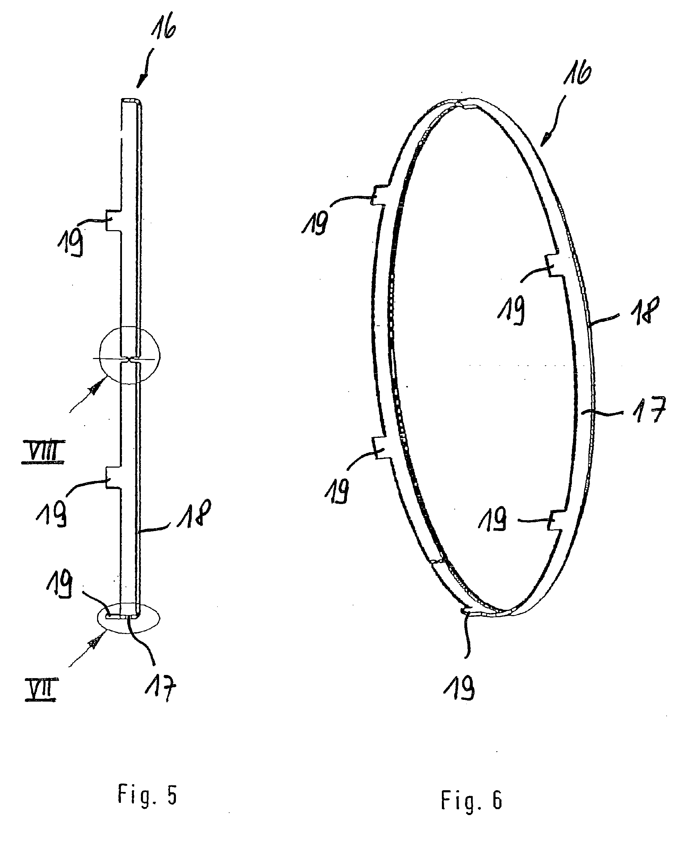

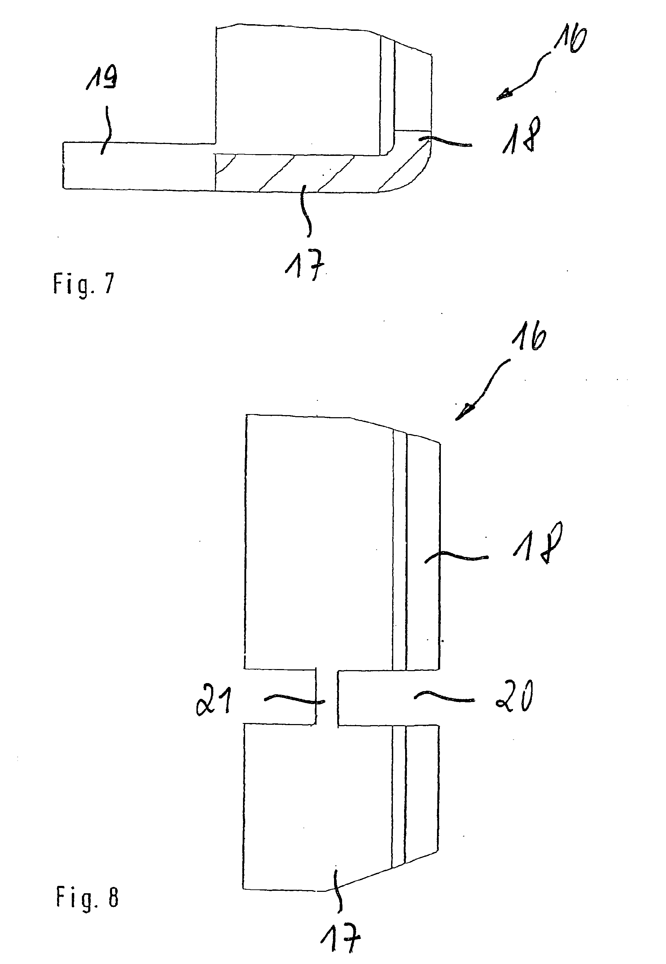

Wie die Figuren 5, 6, 7 und 8 zeigen, besteht das erfindungsgemäße Halteelement 16 aus dem in axialer Richtung verlaufenden Ringkörper 17, der an einem Ende in den radial nach innen ausgerichteten Flansch 18 übergeht. Am gegenüber liegenden axialen Ende ist der Ringkörper 17 mit mehreren gleichmäßig um den Umfang voneinander beabstandeten Haltenasen 19 versehen, die zunächst noch in axialer Richtung verlaufen. Wie insbesondere aus Figur 8 erkennbar, ist das Halteelement 16 mit einem Schlitz 20 versehen, wobei jedoch in dieser Darstellung der Schlitz 20 zunächst durch die Sollbruchstelle 21 überbrückt ist. Diese Sollbruchstelle 21 wird vor der Montage des Halteelementes in die Lageranordnung 1 beseitigt, indem beispielsweise die beiden Enden des Halteelementes 16 aufeinander zu- oder aufeinander wegbewegt werden. Auf diese Weise ist ein geschlitztes Halteelement 16 hergestellt, das in seiner Umfangsausdehnung sowohl verkleiner- als auch vergrößerbar ist.

Der Zusammenbau der erfindungsgemäßen Lageranordnung 1 wird nachfolgend unter Bezugnahme auf die vergrößerte Darstellung in Figur 4 näher erläutert:
Zunächst wird das mit dem durchgehenden Schlitz 20 versehene ringartige Halteelement 16 aufgeweitet, sodass es mit seinem radial nach innen gerichteten Flansch 18 in den Hinterschnitt 15 des Lageraußenringes 7 eingeschnappt ist. Das Halteelement 16 ist dabei so ausgestaltet, dass es mit seinem Ringkörper 17 vollständig an die Mantelfläche der Ausnehmung 14 zur Anlage gelangt. In diesem Montagzustand sind im Gegenteil zur Darstellung gemäß Figur 4 die Haltenasen 19 noch axial ausgerichtet, d. h., noch nicht umgelegt. Diese axiale Ausrichtung der Haltenasen 19 geht aus den Figuren 5, 6 und 7 hervor.
Nachdem das Halteelement in den Hinterschnitt 15 eingeschnappt ist, wird der Lagerträger 2 in axialer Richtung von links nach rechts auf das Halteelement 16 aufgeschoben, bis er an der radial verlaufenden Anlagefläche 22 der Ausnehmung 14 zur Anlage gelangt. Wenn dies erfolgt ist, werden mit Hilfe eines geeigneten Werkzeuges die Haltenasen 19 von der axialen Ausrichtung in eine radiale Ausrichtung gebracht, sodass sie an der nicht bezeichneten Stirnseite des Lagerträgers 2 anliegen. Auf diese Weise ist eine formschlüssige Verbindung zwischen Lager 6 und Lagerträger 2 hergestellt, wobei, wie bereits vorstehend beschrieben, das Halteelement 16 zwischen Lager 6 und Lagerträger 2 entweder mit Spielpassung oder auch mit einer Presspassung unterbringbar ist.

### Bezugszeichen

1 Lageranordnung
2 Lagerträger
3 Befestigungsbohrung
4 abgewinkelter Teil
5 Aufnahmebohrung
6 Lager
7 Lageraußenring
8 Lagerinnenring
9 Käfig
10 Lagerkugel
11 Lagerachse
12 Deckscheibe
13 Deckscheibe
14 Ausnehmung
15 Hinterschnitt
16 Halteelement
17 Ringkörper
18 Flansch
19 Haltenase
20 Schlitz
21 Sollbruchstelle
22 Anlagefläche

- D1: Durchmesser
- D2: Durchmesser

## Patentansprüche

1. Lageranordnung (1), bestehend aus einem zumindest teilweise eben ausgebildeten Lagerträger (2) mit einer Aufnahmebohrung (5) und mindestens einem mit diesem verbundenen Lager (6), wobei ein Außenring (7) des Lagers (6) eine Ausnehmung (14) zur Aufnahme des Lagerträgers (2) aufweist,
wobei die Ausnehmung (14) an ihrem axial innen liegenden Ende einen Hinterschnitt (15) aufweist, dessen auf eine Lagerachse (11) bezogener Durchmesser (D1) kleiner als ein Durchmesser (D2) ist, der von einem axial verlaufenden Teil der Ausnehmung (14) gebildet ist, wobei in den Hinterschnitt (15) ein geschlitztes ringartiges Halteelement (16) eingesetzt ist, das den Lagerträger (2) an wenigstens einer Umfangsstelle In radialer Richtung formschlüssig überdeckt, ***dadurch gekennzeichnet, dass** das Halteelement (16) im Wesentlichen L-förmig ausgebildet ist, einen axial ausgerichteten Ringkörper (17) und einen radial nach innen gerichteten Flansch (18) aufweist, wobei der Ringkörper zwischen dem Lagerträger (2) und dem Lageraußenring (7) angeordnet ist und dass das Halteelement(16) mit dem Flansch (18) in den Hinterschnitt (15) eingeschnappt ist sowie mit dem Ringkörper (17) vollständig an einer Mantelfläche der Ausnehmung (14) zur Anlage kommt.*

2. Lageranordnung (1) nach Anspruch 1, **dadurch gekennzeichnet, dass** der Ringkörper (17)
*an einem* axialen Ende an mehreren voneinander beabstandeten Umfangsstellen Haltenasen (19) aufweist, die den Lagerträger (2) nach deren Umlegen in radialer Richtung überdecken,

3. Lageranordnung (1) nach Anspruch 2, **dadurch gekennzeichnet, dass** der Ringkörper (17) zwischen dem Lagerträger (2) und dem Lageraußenring (7) mittels einer Spiel- oder einer Presspassung angeordnet ist.

4. Lageranordnung (1) nach Anspruch 1, **dadurch gekennzeichnet, dass** das Halteelement (16) durch einen spanlosen Formgebungsvorgang hergestellt ist.

5. Lageranordnung (1) nach Anspruch 1, **dadurch gekennzeichnet, dass** das Halteelement (16) eine Transportsicherung in Form einer Sollbruchstelle (21) aufweist.

6. Verfahren zur Herstellung einer Lageranordnung (1) nach wenigstens einem der vorhergehenden Ansprüche 1 bis 5, **dadurch gekennzeichnet, dass** das Halteelement (16) in einem ersten Schritt als ein profiliertes Endlosband durch einen spanlosen Formgebungsvorgang hergestellt ist, in einem zweiten Schritt entsprechend der vorgegebenen Umfangsausdehnung von Lager (6) und Lagerträger (2) ein in der Längsausdehnung passendes Bandende abgelängt ist, in einem dritten Schritt dieses Bandende zu dem Halteelement (16) rundgebogen ist, in einem vierten Schritt dieses Halteelement (16) aufgeweitet und in den Hinterschnitt (15) des Lageraußenringes (7) eingefedert ist, in einem fünften Schritt der Lagerträger (2) auf das Halteelement (16) aufgeschoben ist, bevor in einem sechsten Schritt die Haltenasen (19) des Halteelementes (16) umgebogen sind.

7. Verfahren zur Herstellung einer Lageranordnung (1) nach wenigstens einem der Ansprüche 1 bis 5, **dadurch gekennzeichnet, dass** das Halteelement (16) in einem ersten Schritt als ein Einzelteil mit einer Transportsicherung in Form einer Sollbruchstelle (21) hergestellt ist, in einem zweiten Schritt die Sollbruchstelle (21) aufgehoben ist, in einem dritten Schritt dieses Haltelement (16) aufgeweitet und in den Hinterschnitt (15) des Außenringes (7) eingefedert ist, in einem vierten Schritt der Lagerträger (2) auf das Halteelement (16) aufgeschoben ist, bevor in einem fünften Schritt die Haltenasen (19) des Halteelementes (16) umgebogen sind.

## Claims

1. Bearing arrangement (1), composed of a bearing carrier (2) which is of at least partially planar design and has a holding bore (5), and of at least one bearing (6) which is connected to said bearing carrier (2), with an outer ring (7) of the bearing (6) having a recess (14) for holding the bearing carrier (2), with the recess (14) having, at its axially inner end, an undercut (15) whose diameter (D1) in relation to a bearing axis (11) is smaller than a diameter (D2) formed by an axially running part of the recess (14), with a slotted annular retaining element (16) being inserted into the undercut (15), which retaining element (16) overlaps the bearing carrier (2) in a positively locking manner in the radial direction at at least one circumferential point, **characterized in that** the retaining element (16) is of substantially L-shaped design and has an axially aligned ring body (17) and a radially inwardly aligned flange (18), with the ring body being arranged between the bearing carrier (2) and the bearing outer ring (7), and **in that** the retaining element (16) is snapped with the flange (18) into the undercut (15), and by means of the ring body (17), comes completely into contact against a lateral surface of the recess (14).

2. Bearing arrangement (1) according to Claim 1, **characterized in that** the ring body (17) has retaining lugs (19) at one axial end at a plurality of spaced-apart circumferential points, which retaining lugs (19), after being folded over, overlap the bearing carrier (2) in the radial direction.

3. Bearing arrangement (1) according to Claim 2, **characterized in that** the ring body (17) is arranged between the bearing carrier (2) and the bearing outer ring (7) with a clearance fit or interference fit.

4. Bearing arrangement (1) according to Claim 1, **characterized in that** the retaining element (16) is produced by means of a non-cutting shaping process.

5. Bearing arrangement (1) according to Claim 1, **characterized in that** the retaining element (16) has a transport securing facility in the form of a predetermined breaking point (21).

6. Method for producing a bearing arrangement (1) according to at least one of the preceding Claims 1 to 5, **characterized in that**, in a first step, the retaining element (16) is produced as a profiled endless strip by means of a non-cutting shaping process, in a second step, a strip end is cut to length so as to have a longitudinal extent matching the predefined circumferential extent of the bearing (6) and bearing carrier (2), in a third step, said strip end is bent round so as to form the retaining element (16), in a fourth step, said retaining element (16) is expanded and allowed to contract into the undercut (15) of the bearing outer ring (7), in a fifth step, the bearing carrier (2) is pushed onto the retaining element (16), and subsequently in a sixth step, the retaining lugs (19) of the retaining element (16) are bent over.

7. Method for producing a bearing arrangement (1) according to at least one of Claims 1 to 5, **characterized in that**, in a first step, the retaining element (16) is produced as an individual part with a transport securing facility in the form of a predetermined breaking point (21), in a second step, the predetermined breaking point (21) is severed, in a third step, said retaining element (16) is expanded and allowed to contract into the undercut (15) of the outer ring (7), in a fourth step, the bearing carrier (2) is pushed onto the retaining element (16), and subsequently in a fifth step, the retaining lugs (19) of the retaining element (16) are bent over.

## Revendications

1. Agencement de palier (1), se composant d'un support de palier (2) réalisé au moins partiellement de manière plane possédant un alésage de réception (5), et d'au moins un palier (6) relié à ce support de palier, une bague extérieure (7) du palier (6) comprenant un évidemment (14) pour la réception du support de palier (2), l'évidement (14) comprenant à son extrémité axialement intérieure une contre-dépouille (15) dont le diamètre (D1) mesuré par rapport à un axe de palier (11) est inférieur à un diamètre (D2) qui est formé par une partie s'étendant axialement de l'évidement (14), un élément de retenue (16) fendu en forme de bague étant enfoncé dans la contre-dépouille (15), lequel élément de retenue recouvre le support de palier (2) par engagement par complémentarité de forme dans la direction radiale en au moins un emplacement périphérique, **caractérisé en ce que** l'élément de retenue (16) est essentiellement réalisé en forme de L, et comprend un corps annulaire (17) orienté axialement et une bride (18) orientée radialement vers l'intérieur, le corps annulaire étant disposé entre le support de palier (2) et la bague extérieure de palier (7), et **en ce que** l'élément de retenue (16) est encliqueté dans la contre-dépouille (15) par l'intermédiaire de la bride (18) et vient prendre appui complètement sur une surface extérieure de l'évidement (14) par l'intermédiaire du corps annulaire (17).

2. Agencement de palier (1) selon la revendication 1, **caractérisé en ce que** le corps annulaire (17) comprend à une extrémité axiale des ergots de retenue (19) en plusieurs emplacements périphériques espacés les uns des autres, lesquels ergots de retenue recouvrent le support de palier (2) après son rabattement dans la direction radiale.

3. Agencement de palier (1) selon la revendication 2, **caractérisé en ce que** le corps annulaire (17) est disposé entre le support de palier (2) et la bague extérieure de palier (7) au moyen d'un ajustement avec jeu ou d'un ajustement serré.

4. Agencement de palier (1) selon la revendication 1, **caractérisé en ce que** l'élément de retenue (16) est fabriqué par une opération de façonnage sans enlèvement de copeaux.

5. Agencement de palier (1) selon la revendication 1, **caractérisé en ce que** l'élément de retenue (16) comprend une fixation pour le transport sous la forme d'un emplacement de rupture imposée (21).

6. Procédé de fabrication d'un agencement de palier (1) selon au moins l'une quelconque des revendications 1 à 5, **caractérisé en ce que** l'élément de retenue (16) est fabriqué dans une première étape, par une opération de façonnage sans enlèvement de copeaux, en tant que bande sans fin profilée, dans une deuxième étape, en fonction de la dimension périphérique prédéfinie du palier (6) et du support de palier (2), une extrémité de bande de dimension longitudinale appropriée est coupée à longueur, dans une troisième étape, cette extrémité de bande est cintrée de manière à former l'élément de retenue (16), dans une quatrième étape, cet élément de retenue (16) est élargi et comprimé dans la contre-dépouille (15) de la bague extérieure de palier (7), dans une cinquième étape, le support de palier (2) est enfilé sur l'élément de retenue (16), avant que les ergots de retenue (19) de l'élément de retenue (16) ne soient coudés dans une sixième étape.

7. Procédé de fabrication d'un agencement de palier (1) selon au moins l'une quelconque des revendications 1 à 5, **caractérisé en ce que** l'élément de retenue (16) est fabriqué dans une première étape en tant que partie individuelle possédant une fixation pour le transport sous la forme d'un emplacement de rupture imposée (21), dans une deuxième étape, l'emplacement de rupture imposée (21) est rompu, dans une troisième étape, cet élément de retenue (16) est élargi et comprimé dans la contre-dépouille (15) de la bague extérieure (7), dans une quatrième étape, le support de palier (2) est enfilé sur l'élément de retenue (16) avant que les ergots de retenue (19) de l'élément de retenue (16) ne soient cintrés dans une cinquième étape.
